# EUROPÄISCHE PATENTSCHRIFT

(11) **EP 2 949 606 B1**
(45) Veröffentlichungstag und Bekanntmachung des Hinweises auf die Patenterteilung: **01.01.2020**
(21) Anmeldenummer: 15168218.4
(22) Anmeldetag: 19.05.2015
(51) Int. Cl.: B65G 1/137

(54) **ANORDNUNG ZUR REIHENFOLGERICHTIGEN KOMMISSIONIERUNG UND BEREITSTELLUNG VON WAREN**
ASSEMBLY FOR IN SEQUENCE PICKING AND PROVIDING OF GOODS
SYSTÈME DE COMMISSIONNEMENT DANS LE BON ORDRE ET PRÉPARATION DE MARCHANDISES

(30) Priorität: 19.05.2014 DE 102014107023
(43) Veröffentlichungstag der Anmeldung: 02.12.2015
(73) Patentinhaber: BSS Bohnenberg GmbH, 42697 Solingen (DE)
(72) Erfinder: Bohnenberg, Harald, 40567 Düsseldorf (DE); Gräb, Martin, 58239 Schwerte (DE)
(74) Vertreter: Grape & Schwarzensteiner

(56) Entgegenhaltungen:
- EP-A1- 0 627 371
- EP-A2- 0 396 960
- EP-B1- 1 035 045
- WO-A1-2012/156355
- DE-A1-102006 025 617
- DE-A1-102006 025 620
- US-A- 4 073 388
- US-A- 4 527 937
- US-A1- 2013 031 876

## Beschreibung

Die vorliegende Erfindung betrifft eine Anordnung zur reihenfolgerichtigen Kommissionierung und Bereitstellung von Waren, insbesondere von quaderförmigen Stückgütern wie Behältern, Kartons oder (Getränke-)Kisten.

Anordnungen zur Kommissionierung und Bereitstellung von Waren bzw. Kolli sind allgemein bekannt. Beispielsweise ist aus der EP 1 035 045 B1 eine solche Anordnung bekannt. Diese Anordnung besteht aus einem wareneingangsseitigen Ende zum Aufnehmen von mit jeweils gleichartigen Waren bestückten Paletten, einen Depalettierplatz zum Vereinzeln der jeweils gleichartigen Waren von den Paletten, welcher dem wareneingangsseitigen Ende nachgeordnet ist, einer Vielzahl von nebeneinander angeordneten Transportbahnen, durch welche die vereinzelten Waren aufnehmbar und zu einem Ende der Transportbahnen bewegbar sind, wobei jede der Transportbahnen nur jeweils gleichartige Waren aufnimmt, einer Vielzahl von Entnahmeeinrichtungen am Ende jeder der Transportbahnen, durch welche zu kommissionierende, zum Versand bereitzustellende Waren aus den Transportbahnen rechnergesteuert freigebbar und über eine horizontal verlaufende Förderbahn zu einem Packtisch weiter bewegbar sind, und einem warenausgangsseitigen Ende zum Abgeben der mit kommissionierten, zum Versand bereitgestellten Waren bestückten Paletten. Diese Anordnung hat sich in der Praxis als verhältnismäßig nachteilig erwiesen. Zum einen ist ein Lagerbereich mit Regalen zur Lagerung der beladenen Paletten vorgeschlagen, was einerseits eine ausgesprochen stabile Bauweise insgesamt und andererseits eine hohe logistische Leistung voraussetzt. Zum anderen erfordert diese Anordnung einen enorm hohen Platzbedarf infolge der Anordnung sämtlicher Anordnungskomponenten in einer Ebene und eines daraus resultierenden ebenflächigen Warenflusses. Beides gestaltet sich besonders investitions- und betriebs- sowie personalkostenintensiv und damit ausgesprochen kostenaufwendig.

Des Weiteren ist aus der US 4 073 388 A ein Liftsystem bekannt.

In der US 2013/0031876 A1 ist eine Kommissionierungsanlage und ein Verfahren zum Kommissionieren von Packstücken beschrieben. Die Anlage umfasst eine Entnahmeeinrichtung, die Mittel zum Depalettieren von Packstücken, um die Packstücke einzeln von in einem Hochregallager angeordneten Paletten auf einen Förderer zu verbringen. Die Kommissionierung der Packstücke findet ersichtlich in einer Ebene statt. Der Förderer ist dem Hochregallager in einer Ebene zugeordnet.

Aus der WO 2012/156355 A1 ist eine Anordnung zur reihenfolgerichtigen Kommissionierung und Bereitstellung von Waren bekannt. Insbesondere ist ein Verfahren zum Lagern und/oder Kommissionieren von Wareneinheiten beschrieben, das auf einer Anordnung basiert, bei welcher auf Transportpaletten ankommende Waren in einer Depalettiereinrichtung vereinzelt, die vereinzelten Waren zu Wareneinheiten zusammengefasst und in Transportshuttles aufgenommen werden. Die Transportshuttles transportieren die Wareneinheiten auf Transportschienen zu einen Pufferlager. In dem Pufferlager werden die Wareneinheiten zwischengelagert. Durch Vorausberechnung der Beladesequenz und geschickte Disposition der Transportshuttles werden die Wareneinheiten aus dem Pufferlager gemäß Anforderung abgerufen, von den Transportshuttles aus dem Pufferlager ausgelagert und aufgenommen. Die Transportshuttles transportieren die Wareneinheiten anschließend auf Transportschienen zu einer Palettiereinrichtung, um die Wareneinheiten letztlich auf Mischpaletten in gewünschter Weise zusammenzustellen. Die Wareneinheiten werden insoweit von gesonderten Transportshuttles, die auf Transportschienen geführt sind, in das und aus dem Pufferlager ein- bzw. ausgelagert.

Der vorliegenden Erfindung liegt daher die Aufgabe zugrunde, eine Anordnung zur reihenfolgerichtigen Kommissionierung und Bereitstellung von Waren bzw. Kolli zur Verfügung zu stellen, welche konstruktiv besonders einfach, kompakt und platzsparend ausgestaltet ist und zugleich ein hohes Leistungsvermögen bei der Warenumschlagung aufweist.

Diese Aufgabe wird in anordnungstechnischer Hinsicht auf überraschend einfache Weise durch die Merkmale des Anspruchs 1 gelöst.

Durch die Ausgestaltung der erfindungsgemäßen Anordnung zur reihenfolgerichtigen Kommissionierung und Bereitstellung von Waren, insbesondere von quaderförmigen Stückgütern wie Behältern, Kartons oder (Getränke-)Kisten, umfassend ein wareneingangsseitiges Ende zum Aufnehmen von mit jeweils gleichartigen Waren bestückten Sammelladungsträgern, mindestens eine dem wareneingangsseitigen Ende nachgeordnete, vertikal oder im Wesentlichen vertikal verlaufende Transportbahn, über welche die mit den jeweils gleichartigen Waren bestückten Sammelladungsträger vertikal nach oben bewegbar sind, wenigstens einen der vertikal oder im Wesentlichen vertikal verlaufenden Transportbahn nachgeordneten Entstapelplatz zum Vereinzeln der jeweils gleichartigen Waren von den Sammelladungsträgern, eine Vielzahl von über- und/oder nebeneinander angeordneten Transportbahnen, von welchen die vereinzelten Waren aufnehmbar und zu einem Ende der Transportbahnen bewegbar sind, wobei jede der Transportbahnen nur jeweils gleichartige Waren aufnimmt und wobei die über- und/oder nebeneinander angeordneten Transportbahnen von der wenigstens einen oberen Ebene des wenigstens einen Entstapelplatzes und/oder Stapelplatzes zu der Ebene von wareneingangsseitigem und warenausgangsseitigem Ende geneigt angeordnet, eine Vielzahl von Entnahmeeinrichtungen am Ende jeder der Transportbahnen, durch welche zu kommissionierende, zum Versand bereitzustellende Waren aus den Transportbahnen rechnergesteuert freigebbar sind, wenigstens zwei den Entnahmeeinrichtungen nachgeordnete, wenigstens teilweise vertikal verlaufende Förderbahnen, an/über welche die kommissionierten, zum Versand bereitgestellten Waren rechnergesteuert übergebbar und nach oben bewegbar sind, wobei die wenigstens zwei vertikal verlaufenden Förderbahnen einen Matrixsorter bilden und eine reihenfolgerichtige Kommissionierung und Bereitstellung von Waren zusammen mit den Entnahmeeinrichtungen und einer Steuereinrichtung in einer Kontroll- und Kommandostation (jeweils nicht dargestellt) ermöglichen, wenigstens einen der wenigstens einen teilweise vertikal verlaufenden Förderbahn nachgeordneten Stapelplatz zum Bestücken der Sammelladungsträger mit den kommissionierten, zum Versand bereitgestellten Waren, mindestens eine dem Stapelplatz nachgeordnete, vertikal oder im Wesentlichen vertikal verlaufende Transportbahn, über welche die mit den kommissionierten, zum Versand bereitgestellten Waren bestückten Sammelladungsträger vertikal nach unten bewegbar sind, und ein der vertikal verlaufenden Transportbahn nachgeordnetes, warenausgangsseitiges Ende zum Abgeben der mit kommissionierten, zum Versand bereitgestellten Waren bestückten Sammelladungsträger, wobei das wareneingangsseitige Ende zum Aufnehmen von den mit jeweils gleichartigen Waren bestückten Sammelladungsträgern in einer horizontalen Ebene unterhalb einer horizontalen Ebene des wenigstens einen Entstapelplatzes zum Vereinzeln der jeweils gleichartigen Waren von den Sammelladungsträgern und das warenausgangsseitige Ende zum Abgeben der von mit kommissionierten, zum Versand bereitgestellten Waren bestückten Sammelladungsträger in einer horizontalen Ebene unterhalb einer horizontalen Ebene des wenigstens einen Stapelplatzes angeordnet sind, wird eine besonders einfache, zudem ausgesprochen kompakte und stabile sowie sehr platzsparende Bauweise der Anordnung erreicht. Dies lässt sich insbesondere durch eine Anordnung von wareneingansseitigem und warenausgangsseitigem Ende in wenigstens einer horizontalen Ebene sowie weiteren Anordnungskomponenten in wenigstens einer dazu unterschiedlichen horizontalen Ebene zueinander erhalten, wodurch der vorhandene, die erfindungsgemäße Anordnung aufzunehmende Raum vollständig ausgenutzt werden kann. Die Folge ist eine erheblich kleinere Flächenausbreitung der Anordnung insgesamt. Eine solche Ausnutzung des vorhandenen Raumes auch in der Höhe lässt sich erst durch die Ausbildung der erfindungsgemäßen Anordnung erreichen. Gleichzeitig führt die erfindungsgemäße Anordnung nicht zuletzt aufgrund der Ausbildung in wenigstens zwei oder mehreren horizontalen Ebenen zu einer optimalen Auslastung und gleichzeitig einem wesentlich verbesserten Leistungsvermögen bei der Warenumschlagung selbst, und zwar unter erheblicher Reduzierung der Investitions- und Betriebs- sowie Personalkosten.

Vorteilhafte konstruktive Einzelheiten der erfindungsgemäßen Anordnung sind in den Ansprüchen 2 bis 15 beschrieben.

Das wareneingangsseitige Ende und das warenausgangsseitige Ende sind nach Anspruch 2 vorzugsweise auf einer gemeinsamen, insbesondere im Wesentlichen ebenerdigen, Ebene angeordnet.

Nach Anspruch 3 sind der wenigstens eine Entstapelplatz und der wenigstens eine Stapelplatz auf einer gemeinsamen Ebene und/oder auf zueinander unterschiedlichen Ebenen angeordnet.

Von großem Interesse für eine ausgesprochen einfache Bauweise unter größtmöglicher Raumausnutzung sind in diesem Zusammenhang die konstruktiven Maßnahmen, wonach der wenigstens eine Entstapelplatz und der wenigstens eine Stapelplatz auf einer gemeinsamen Ebene oberhalb der ebenerdigen Ebene des wareneingangsseitigen Endes und des warenausgangsseitigen Endes angeordnet sind.

In vorteilhafter Weise für eine zusätzliche Vereinfachung von Bauweise der Anordnung insgesamt und einfachen Warenfluss sind die Maßnahmen des Anspruchs 4. Danach sind das wareneingangsseitige Ende und das warenausgangsseitige Ende zueinander benachbart angeordnet.

In alternativer und/oder kumulativer Ausgestaltung dazu sind das wareneingangsseitige Ende und das warenausgangsseitige Ende nach Anspruch 5 insbesondere in einem randseitigen Bereich oder am Rand einer rechteckförmig, quadratisch, kreisförmig oder ellipsenförmig ausgebildeten Grundfläche der Anordnung angeordnet.

Darüber hinaus ist vorzugsweise vorgesehen, dass die Waren vom wareneingangsseitigen Ende bis zum warenausgangsseitigen Ende nach Anspruch 6 in einem Warenfluss von nahezu geschlossener, insbesondere an eine rechteckförmig, quadratisch, kreisförmig oder ellipsenförmig ausgebildete Grundfläche der Anordnung angepasster, Form bewegbar sind.

Dazu alternativ und/oder kumulativ sind die Waren vom wareneingangsseitigen Ende bis zum warenausgangsseitigen Ende nach Anspruch 7 insbesondere in einem Warenfluss über wenigstens zwei Ebenen zwischen dem wareneingangsseitigen Ende und dem warenausgangsseitigen Ende bewegbar.

Nach Anspruch 8 ist vorzugsweise vorgesehen, dass dem wareneingangsseitigen Ende und/oder dem warenausgangsseitigen Ende ein Sammelladungsträgerzwischenlager zur Aufnahme der mit jeweils gleichartigen Waren bestückten Sammelladungsträger und/oder der mit kommissionierten, zum Versand bereitgestellten Waren bestückten Sammelladungsträger zugeordnet ist/sind.

In diesem Zusammenhang ist nach Anspruch 9 vorzugsweise vorgesehen, dass das Sammelladungsträgerzwischenlager in einem Bereich im Wesentlichen unterhalb des wenigstens einen Entstapelplatzes und/oder des wenigstens einen Stapelplatzes angeordnet ist.

Entsprechend den Merkmalen nach Anspruch 10 ist/sind der wenigstens eine Entstapelplatz und/oder der wenigstens eine Stapelplatz auf einer Bühne, einem Gerüst oder dergleichen Tragkonstruktion, insbesondere aus Stahl, angeordnet.

Weiterhin ist/sind der wenigstens eine Entstapelplatz und/oder der wenigstens eine Stapelplatz nach Anspruch 11 automatisch oder manuell betreibbar ausgebildet. Von ganz besonderem Vorteil erweist sich die Anordnung über wenigstens zwei Ebenen im Hinblick auf eine erhebliche körperliche Entlastung des Bedienungspersonals für den wenigstens einen Entstapelplatz und/oder Stapelplatz. So ist es dem Bedienungspersonal ermöglicht, die Waren einfach und schnell von einem Sammelladungsträger zu vereinzelnen bzw. auf einen Sammelladungsträger zu laden, ohne die Waren selbst heben oder sonstwie handhaben zu müssen. Durch gegenseitige zeitliche Abstimmung der Hubgeschwindigkeit bzw. des Taktes zwischen der vertikal oder im Wesentlichen vertikal verlaufenden Transportbahn, welche dem Entstapelplatz vorgeordnet bzw. dem Stapelplatz nachgeordnet ist, und der von dem Bedienungspersonal benötigten Zeit zum Vereinzeln bzw. Beladen von Waren müssen die Waren nur mehr durch horizontales Verschieben weiterbewegt werden. Es entfällt bei einer manuellen Entstapelung der Waren damit in vorteilhafter Weise jegliche bisherige gewichtsmäßige und damit körperliche sowie gesundheitsschädliche Beanspruchung des Bedienungspersonals.

Darüber hinaus ist/sind der wenigstens eine Entstapelplatz und/oder der wenigstens eine Stapelplatz nach Anspruch 12 manuell betreibbar ausgebildet und zwischen zwei vertikal oder im Wesentlichen vertikal verlaufenden Transportbahnen, über welche die mit den Waren bestückten Sammelladungsträger vertikal nach oben bzw. nach unten bewegbar sind, angeordnet.

Bevorzugt sind die über- und/oder nebeneinander angeordneten Transportbahnen nach Anspruch 13 von der wenigstens einen oberen Ebene des wenigstens einen Entstapelplatzes und/oder Stapelplatzes zu der Ebene von wareneingangsseitigem und warenausgangsseitigem Ende in einer Neigung mit einem Winkel von bis zu etwa 15°, insbesondere zwischen etwa 2° und 10° und vorzugsweise zwischen etwa 3° und 7° angeordnet.

Entsprechend Anspruch 14 ist sind den über- und/oder nebeneinander angeordneten Transportbahnen eine oder mehrere Fördereinrichtung/en am Anfang der Transportbahnen, durch welche die vereinzelten Waren in die Transportbahnen hineinförderbar sind, zugeordnet.

Schließlich liegt es noch im Rahmen der Erfindung, dass nach Anspruch 15 die wenigstens eine Förderbahn, welche den Entnahmeeinrichtungen nachgeordnet ist und wenigstens teilweise vertikal verläuft, als lineare Hubfördereinrichtung und/oder Spiral- oder Schraubenfördereinrichtung ausgebildet ist.

Weitere Vorteile und Einzelheiten der Erfindung ergeben sich aus der nachfolgenden Beschreibung einer bevorzugten Ausführungsform der Erfindung sowie anhand der Zeichnungen. Hierbei zeigen:
- Fig. 1: eine schematische perspektivische Ansicht einer Ausführungsform einer erfindungsgemäßen Anordnung zur reihenfolgerichtigen Kommissionierung und Bereitstellung von Waren bzw. Kolli,
- Fig. 2: eine schematische perspektivische Ansicht der Ausführungsform der erfindungsgemäßen Anordnung entsprechend der Fig. 1, ohne Darstellung einer oberen Ebene, und
- Fig. 3: eine auseinandergezogene Seitenansicht der Ausführungsform der Anordnung nach den Fig. 1 und 2.

Bei der nachfolgenden Beschreibung einer Ausführungsform einer erfindungsgemäßen Anordnung 10 zur reihenfolgerichtigen Kommissionierung und Bereitstellung von Waren 12 sind einander entsprechende, gleiche Bauteile jeweils mit identischen Bezugsziffern versehen.

Die Anordnung 10 ist zur reihenfolgerichtigen Kommissionierung und Bereitstellung von Waren 12 bzw. Kolli, insbesondere von quaderförmigen Stückgütern wie Behältern, Kartons oder (Getränke-)Kisten, vorgesehen.

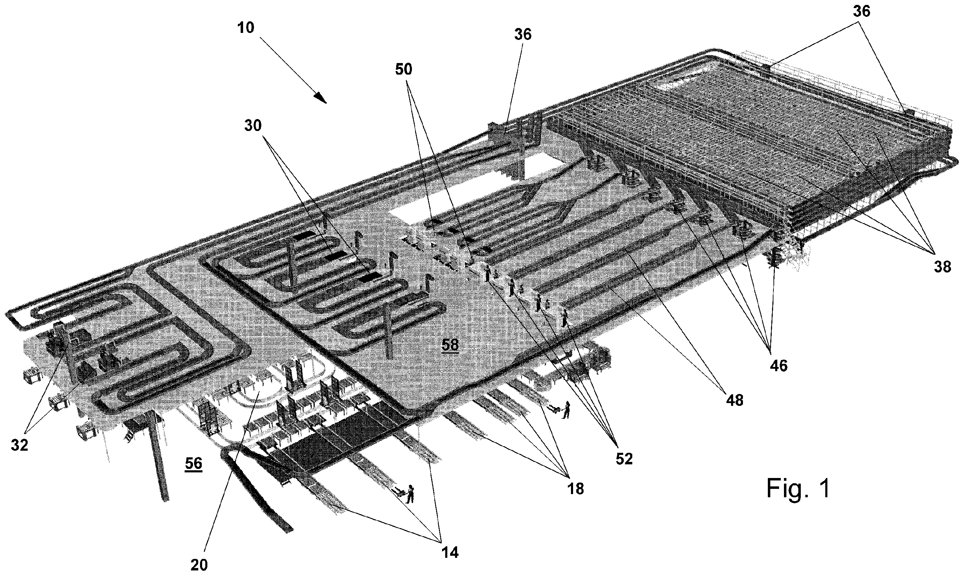

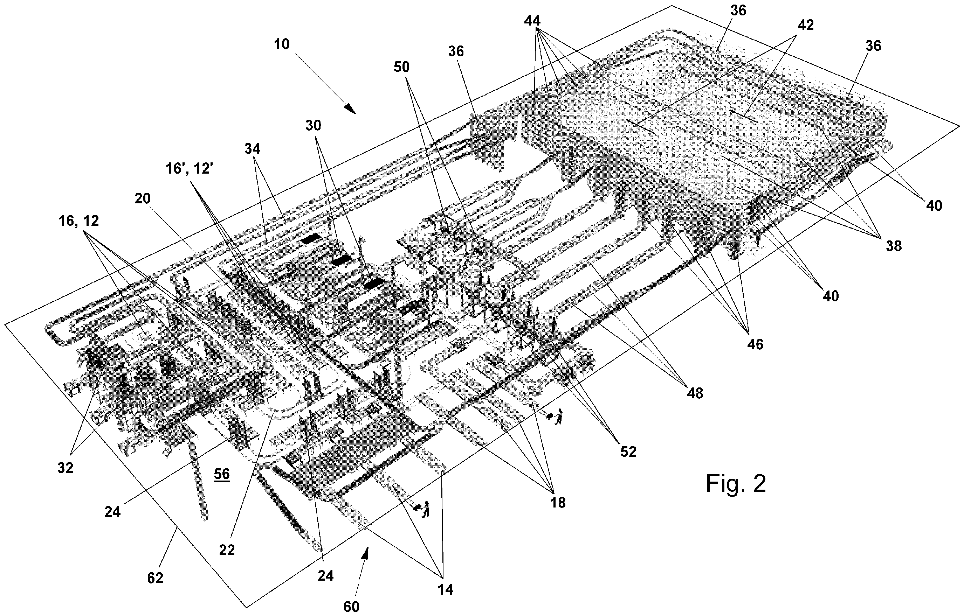

Entsprechend der in den Fig. 1 bis 3 gezeigten Ausführungsform umfasst die Anordnung 10 ein wareneingangsseitiges Ende 14 zum Aufnehmen von Sammelladungsträgern 16. Das wareneingangsseitige Ende 14 entspricht einem Wareneingang für sogenannte Artikelsammelladungsträger, die mit jeweils zum Beispiel gleichartigen Waren 12 bestückt sind.

Weiterhin umfasst die Anordnung 10 ein warenausgangsseitiges Ende 18 zum Abgeben von Sammelladungsträgern 16'. Das warenausgangsseitige Ende 18 entspricht einem Warenausgang für sogenannte Kundensammelladungsträger, die mit kommissionierten, zum Versand bereitgestellten Waren 12' bestückt sind.

Die Sammelladungsträger 16, 16' können zum Beispiel als Paletten, Rollcontainer oder dergleichen ausgebildet sein.

Dem wareneingangsseitigen Ende 14 und/oder dem warenausgangsseitigen Ende 18 ist/sind darüber hinaus ein Sammelladungsträgerzwischenlager 20 zugeordnet, das zum Beispiel mit einer Elektrosammelladungsträgerbahn 22, wie zum Beispiel einer Elektropalettenbahn, ausgerüstet sein kann. Die Elektrosammelladungsträgerbahn 22 weist ein oder mehrere Transportmodule 24, wie Führungswagen oder dergleichen, auf. Von den Transportmodulen 24 werden die Sammelladungsträger 16, 16' aufgenommen und von dem wareneingangsseitigen Ende 14 abtransportiert und direkt zur weitergehenden Behandlung an nachfolgende Einrichtungen weiterbefördert und/oder zu dem warenausgangsseitigen Ende 18 befördert.

Alternativ oder kumulativ dazu ist es möglich, die Sammelladungsträger 16, 16' von den Transportmodulen 24 zunächst in das Sammelladungsträgerzwischenlager 20 zu verbringen und dort zur zeitweisen Zwischenlagerung aufzunehmen. Nach der Zwischenlagerung werden die Sammelladungsträger 16, 16' sodann, also indirekt, zur weitergehenden Behandlung an nachfolgende Einrichtungen weiterbefördert und/oder zu dem warenausgangsseitigen Ende 18 verbracht, um von dort zum Versand vorbereitet zu werden.

Die mit jeweils zum Beispiel gleichartigen Waren 12 bestückten Sammelladungsträger 16 werden direkt von dem wareneingangsseitigen Ende 14 bzw. indirekt aus dem Sammelladungsträgerzwischenlager 20 einer Einrichtung zur Entfernung einer Ladungssicherung zugeführt. So kann beispielsweise als Ladungssicherung eine Folie aus Kunststoff vorgesehen sein, in welche die Waren 12 und die Sammelladungsträger 16 jeweils eingeschweißt sind, um die Waren 12 an bzw. auf den Sammelladungsträgern 16 zu fixieren und zu halten. In der Einrichtung zur Entfernung der Ladungssicherung wird in diesem Fall die Folie entfernt, was automatisch und/oder ebenso manuell erfolgen kann.

Sobald die Ladungssicherungen von den Waren 12 und den Sammelladungsträgern 16 entfernt sind, werden die Sammelladungsträger 16 mindestens einer vertikal oder im Wesentlichen vertikal verlaufenden Transportbahn 28 zugeführt. Die vertikale/n Transportbahn/en 28 ist/sind dem wareneingangsseitigen Ende 14 somit nachgeordnet und können als lineare Hubfördereinrichtung ausgebildet sein. Durch die vertikale/n Transportbahnen 28 sind die mit jeweils zum Beispiel gleichartigen Waren 12 bestückten Sammelladungsträger 16 vertikal nach oben bewegbar. Bei der in den Fig. 1 bis 3 dargestellten Ausführungsform der Anordnung 10 sind insgesamt 6 vertikal oder im Wesentlichen vertikal verlaufende Einrichtungen 28 vorgesehen.

Wie den Fig. 1 bis 3 weiter entnehmbar ist, ist den vertikal verlaufenden Einrichtungen 28 wenigstens ein Entstapelplatz 30, 32 nachgeordnet, an welchem die jeweils gleichartigen Waren 12 von den Sammelladungsträgern 16 vereinzelt werden. Die Ausführungsform der Anordnung 10 weist, wie aus den Fig. 1 bis 3 ersichtlich ist, insgesamt 4 Entstapelplätze 30, 32 auf. Davon sind jeweils 2 Entstapelplätze 30 automatisch und jeweils 2 Entstapelplätze 32 manuell betreibbar ausgebildet.

Grundsätzlich ist der Warendurchsatz eines automatisch betriebenen Entstapelplatzes 30 im Idealfall gegenüber einem manuellen Entstapelplatz 32 größer und für das Bedienungspersonal weniger körperbeanspruchend sowie damit gesundheitsschonender. Dies setzt allerdings einen absolut störungsfreien Ablauf voraus. Mithin dürfen etwa die Waren 12 nicht, auch nicht geringfügig, zueinander verschoben bzw. versetzt sein, müssen die Waren 12 einer jeden Lage eine identische Höhe aufweisen, etc. In der Praxis lässt sich ein absolut störungsfreier Ablauf jedoch nicht realisieren, was häufig zu Unterbrechungen des Warenflusses führen kann, in welchen die Waren 12 vom Bedienungspersonal manuell ausgerichtet oder Wartungs- oder Instandsetzungsarbeiten an dem Entstapelplatz 30 vorgenommen müssen usw. Insoweit kommen manuelle Entstapelplätze 32 in der Praxis zunehmend häufiger und bevorzugt zum Einsatz.

Das Vereinzeln bzw. die Entladung der Waren 12 kann zum Bespiel, aber nicht notwendigerweise, lagenweise und/oder in horizontaler Richtung erfolgen. So werden die Waren 12 der jeweils obersten Lage der Sammelladungsträger 16 auf horizontal oder im Wesentlichen horizontal verlaufende Transportbahnen 34 verbracht. Die Unterseite der Waren 12 der obersten Lage der Waren 12 und die Auflageflächen der Sammelladungsträger 16 bzw. die Oberseite der Waren 12 der unmittelbar unter der obersten Lage befindlichen Lage der Waren 12 und die Auflageflächen der horizontalen Transportbahnen 34 für die Waren 12 befinden sich dabei bevorzugt in einer gemeinsamen Ebene, so dass die Waren 12 von dem Bedienungspersonal nur manuell zu verschieben sind. Das Bedienungspersonal ist somit in die Lage versetzt, die Waren 12 einfach und schnell von einem Sammelladungsträger 16 zu vereinzelnen, ohne die Waren 12 selbst heben, tragen oder sonstwie handhaben bzw. selbst gehen oder sich bücken zu müssen.

Durch gegenseitige zeitliche Abstimmung der Hubgeschwindigkeit bzw. des Hubtaktes zwischen der vertikal oder im Wesentlichen vertikal verlaufenden Transportbahn 28, welche dem jeweiligen Entstapelplatz 30, 32 vorgeordnet ist, und der von dem Bedienungspersonal benötigten Zeit zum Vereinzeln einer Lage von Waren 12 müssen die Waren 12 nur mehr durch horizontales Verschieben weiterbewegt werden. Es entfällt bei einer manuellen Entstapelung der Waren 12 damit in vorteilhafter Weise jeglicher Stillstand der Anordnung bzw. des Warenflusses und jegliche bisherige gewichtsmäßige und damit körperliche sowie gesundheitsschädliche Beanspruchung des Bedienungspersonals.

In diesem Zusammenhang hat sich als besonders vorteilhaft erwiesen, die manuell betreibbaren Entstapelplätze 32 jeweils zwischen zwei vertikal oder im Wesentlichen vertikal verlaufende Transportbahnen 28, über welche die mit den jeweils gleichartigen Waren 12 bestückten Sammelladungsträger 16 vertikal nach oben bewegbar sind, anzuordnen. Auf diese Weise lässt sich der Warendurchsatz der manuellen Entstapelplätze 32 wesentlich erhöhen, da während des Vereinzelns von Waren 12 von einem (ersten) Sammelladungsträger 16 bereits ein weiterer (zweiter) Sammelladungsträger 16 vorbereitet und durch die weitere vertikal verlaufende Transportbahn 28 parallel soweit nach oben bewegt werden kann, so dass das Bedienungspersonal nach dem Vereinzeln der Waren 12 der untersten Lage des (ersten) Sammelladungsträgers 16 zeitlich nahezu übergangslos mit dem Vereinzeln von Waren 12 der obersten Lage des weiteren (zweiten) Sammelladungsträgers 16 fortfahren kann, usw.

Die vereinzelten Waren 12 werden über die horizontal verlaufenden Transportbahnen 34 und/oder horizontale sowie vertikale Weichen 36 einer Vielzahl von über- und/oder nebeneinander angeordneten Transportbahnen 38 zugeführt, welche ein Kommissionierungslager bilden. Am Anfang der Transportbahnen 38 ist/ sind eine oder mehrere Fördereinrichtung/en 40 vorhanden, durch welche die vereinzelten Waren 12 in die Transportbahnen 38 hineinförderbar sind. Die Fördereinrichtung/en 40 ist/sind als Querfördereinrichtungen ausgebildet.

Von den Transportbahnen 38 sind die vereinzelten Waren 12 aufnehmbar und zu einem Ende der Transportbahnen 38 gemäß Pfeil 42 bewegbar, wobei jede der Transportbahnen 38 nur jeweils gleichartige Waren 12 aufnimmt. Die Vielzahl von Transportbahnen 38 bildet einen Fließkanalspeicher für die Waren 12.

Die Transportbahnen 38 verlaufen dabei horizontal oder im Wesentlichen horizontal. Den Transportbahnen 38 sind Einrichtungen (nicht dargestellt) zugeordnet, mittels welchen die Waren 12 entlang der Transportbahnen 38 von deren Anfang zu deren Ende zwangsweise weiterbewegt werden. Die Transportbahnen 38 sind von der wenigstens einen oberen Ebene der Entstapelplätze 30, 32 in Richtung zu der Ebene von wareneingangsseitigem und warenausgangsseitigem Ende 14, 18 geneigt angeordnet. Die Waren 12 werden infolge der Schwerkraft selbsttätig und/oder gegebenenfalls unter Unterstützung von motorgetriebenen (Förder)Einrichtungen (nicht dargestellt) zwangsweise entlang der Transportbahnen 38 von deren Anfang zu deren Ende zum Teil weiterbewegt. Die Neigung beträgt vorzugsweise einen Winkel von bis zu etwa 15°, insbesondere zwischen etwa 2° und 10° und vorzugsweise zwischen etwa 3° und 7°.

Am Ende jeder der Transportbahnen 38 sind Entnahmeeinrichtungen 44 vorzufinden, durch welche zu kommissionierende, zum Versand bereitzustellende Waren 12 aus den Transportbahnen 38 rechnergesteuert freigebbar sind. Die Waren 12' sind reihenfolgerichtig kommissioniert und bereitgestellt.

An wenigstens einer teilweise vertikal verlaufenden Förderbahn 46, welche den Entnahmeeinrichtungen 44 nachgeordnet ist/sind, werden die kommissionierten, zum Versand bereitgestellten Waren 12' rechnergesteuert übergeben und nach oben weiterbefördert. Bei der in den Fig. 1 bis 3 dargestellten Ausführungsform der Anordnung 10 sind insgesamt 7 teilweise vertikal verlaufende Förderbahnen 46 vorgesehen. Die Förderbahnen 46 können dabei als lineare Hubfördereinrichtungen und/oder Spiral- oder Schraubenfördereinrichtungen ausgebildet sein.

Bei der Anordnung 10 bilden in ganz bevorzugter Weise zwei oder mehr teilweise vertikal verlaufende Förderbahnen 46 einen Matrixsorter und stellen eine reihenfolgerichtige Kommissionierung und Bereitstellung von Waren 12' zusammen mit den Entnahmeeinrichtungen 44 und einer Steuereinrichtung in einer Kontroll- und Kommandostation (jeweils nicht dargestellt) sowie einem rechnerbasierten Verfahren sicher.

Von den Förderbahnen 46 werden die kommissionierten, zum Versand bereitgestellten Waren 12' an horizontale oder im Wesentlichen horizontal verlaufende Transportbahnen 48, welche den Förderbahnen 46 nachgeordnet sind, übergeben und mindestens einem Stapelplatz 50, 52 zum Bestücken der Sammelladungsträger 16' mit den kommissionierten, zum Versand bereitgestellten Waren 12' weiterbefördert. Die Ausführungsform der Anordnung 10 weist, wie aus in den Fig. 1 bis 3 gezeigt ist, insgesamt 6 Stapelplätze 50, 52 auf. Davon sind 2 Stapelplätze 50 automatisch und 4 Stapelplätze 52 manuell betreibbar ausgebildet.

Automatische oder manuelle Stapelplätze 50, 52 sind mit automatischen oder manuellen Entstapelplätzen 30, 32 vergleichbar, weshalb im Einzelnen auf vorstehende Ausführungen verwiesen wird. Zunehmend häufiger wird daher in der Praxis auch manuellen Stapelplätzen 52 gegenüber automatischen Stapelplätzen der Vorzug gegeben.

Das Bestücken bzw. die Beladung der Sammelladungsträger 16' mit den Waren 12' kann ebenso zum Beispiel, aber nicht notwendigerweise, lagenweise erfolgen. So werden die Waren 12' von den horizontal verlaufenden Transportbahnen 48 auf die Sammelladungsträger 16' bzw. die Waren 12' der jeweils obersten Lage der Sammelladungsträger 16' verbracht. Die Unterseite der Waren 12' und die Auflageflächen der horizontalen Transportbahnen 48 für die Waren 12' und die Auflageflächen der Sammelladungsträger 16' bzw. die Oberseite der Waren 12' der obersten Lage der Waren 12' fallen dabei bevorzugt in einer Ebene zusammen, so dass die Waren 12' durch das Bedienungspersonal nur zu verschieben sind. Dem Bedienungspersonal ist es damit möglich, einen Sammelladungsträger 16' einfach und schnell mit den Waren 12' zu bestücken bzw. zu beladen, ohne die Waren 12' selbst heben oder sonstwie handhaben zu müssen.

Den Stapelplätzen 50, 52 ist wiederum mindestens eine vertikal oder im Wesentlichen vertikal verlaufende Transportbahn 54 nachgeordnet, über welche die Sammelladungsträger 16' mit den kommissionierten, zum Versand bereitgestellten Waren 12' vertikal nach unten hin zu dem warenausgangsseitigen Ende 18 bewegbar sind. Bei der Ausführungsform der Anordnung 10 ist, wie die Fig. 1 bis 3 erkennen lassen, jedem der Stapelplätze 50, 52 eine vertikal verlaufende Transportbahn 54 nachgeordnet.

Durch gegenseitige zeitliche Abstimmung der Hubgeschwindigkeit bzw. des Hubtaktes zwischen der vertikal verlaufenden Transportbahn 54, welche dem Stapelplatz 50, 52 nachgeordnet ist, und der von dem Bedienungspersonal benötigten Zeit zum Bestücken zum Beispiel einer Lage von Waren 12' müssen die Waren 12' nur mehr durch horizontales Verschieben weiterbewegt werden. Es entfällt bei einer manuellen Stapelung der Waren 12' damit in vorteilhafter Weise jegliche bisherige gewichtsmäßige und damit körperliche sowie gesundheitsschädliche Beanspruchung des Bedienungspersonals.

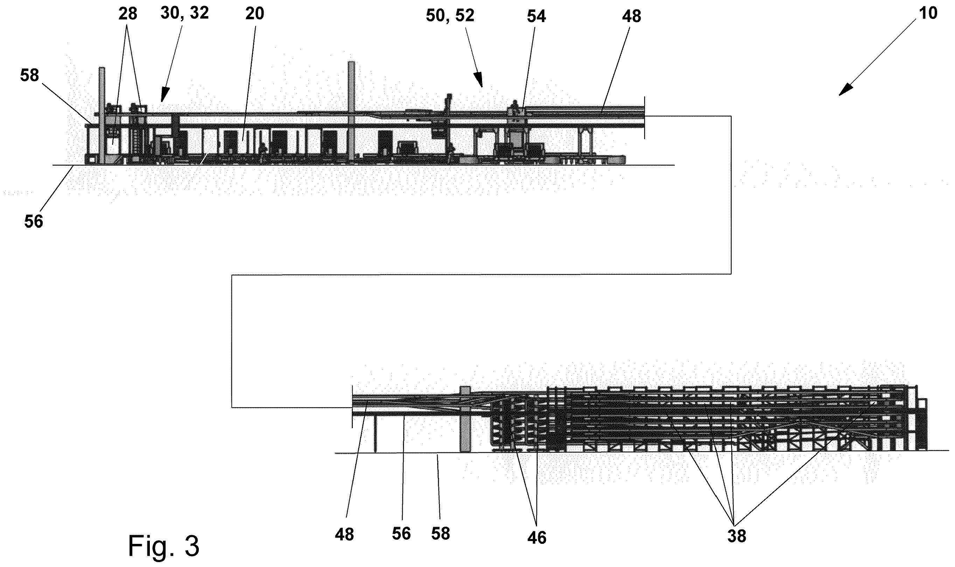

Wie aus den Fig. 1 bis 3, insbesondere der Fig. 3, entnehmbar ist, sind das wareneingangsseitige Ende 14 zum Aufnehmen der Sammelladungsträger 16 bzw. Artikelsammelladungsträger mit den jeweils gleichartigen Waren 12 in einer horizontalen oder im Wesentlichen horizontalen Ebene 56 unterhalb einer horizontalen oder im Wesentlichen horizontalen Ebene 58 des wenigstens einen Entstapelplatzes 32, 34 zum Vereinzeln der jeweils gleichartigen Waren 12 von den Sammelladungsträgern 16 angeordnet. Gleichermaßen ist das warenausgangsseitige Ende 18 zum Abgeben der Sammelladungsträger 16' mit den kommissionierten, zum Versand bereitgestellten Waren 12' in einer horizontalen oder im Wesentlichen horizontalen Ebene 56 unterhalb einer horizontalen oder im Wesentlichen horizontalen Ebene 58 des wenigstens einen Stapelplatzes 50, 52 angeordnet. Die Ebene 58 der Entstapelplätze 30, 32 und/oder der Stapelplätze 50, 52 ist dabei vorzugsweise durch eine Bühne, einem Gerüst oder dergleichen Tragkonstruktion, insbesondere aus Stahl, (aus)gebildet.

Bei dem Ausführungsbeispiel der Anordnung der Fig. 1 bis 3 sind das wareneingangsseitige Ende 14 und das warenausgangsseitige Ende 18 auf einer gemeinsamen, insbesondere ebenerdigen, Ebene 56 angeordnet. Die Entstapelplätze 30, 32 und die Stapelplätze 50, 52 befinden sich ebenso auf einer gemeinsamen Ebene 58.

Ohne im Einzelnen dargestellt zu sein, ist es jedoch möglich die Entstapelplätze 30, 32 und die Stapelplätze 50, 52 alternativ oder kumulativ auf zueinander unterschiedlichen (oberen) Ebenen anzuordnen.

Des Weiteren ergibt sich aus den Fig. 1 bis 3, dass bei der Ausführungsform der Anordnung 10 die Entstapelplätze 30, 32 und die Stapelplätze 50, 52 auf einer gemeinsamen Ebene 58 oberhalb der ebenerdigen Ebene 56 des wareneingangsseitigen Endes 14 und des warenausgangsseitigen Endes 18 angeordnet sind.

Das wareneingangsseitige Ende 14 und das warenausgangsseitige Ende 18 sind zueinander benachbart angeordnet. Dabei befinden sich das wareneingangsseitige Ende 14 und das warenausgangsseitige Ende 18 bei der Ausführungsform der Anordnung 10 in einem randseitigen Bereich 60 oder am Rand einer rechteckförmig ausgebildeten Grundfläche 62 der Anordnung 10.

Die Waren 12, 12' sind darüber hinaus vom wareneingangsseitigen Ende 14 bis zum warenausgangsseitigen Ende 18 in einem Warenfluss von nahezu geschlossener Form bewegbar, die insbesondere an eine rechteckförmig ausgebildete Grundfläche 62 der Anordnung 10 angepasst ist. Zusätzlich sind die Waren 12, 12' in einem Warenfluss über die wenigstens zwei Ebenen 56, 58 zwischen dem wareneingangsseitigen Ende 14 und dem warenausgangsseitigen Ende 18 bewegbar.

Wie sich schließlich noch aus den Fig. 1 bis 3 ergibt, ist das Sammelladungsträgerzwischenlager 20 in einem Bereich im Wesentlichen unterhalb des wenigstens einen Entstapelplatzes 30, 32 und/oder des wenigstens einen Stapelplatzes 50, 52 angeordnet, was zu einer wesentlich verbesserten Raumausnutzung und damit einer erheblichen Einsparung an Platzbedarf sowie Reduzierung von Investitions- und Betriebskosten der Anordnung 10 insgesamt führt.

Die vorliegende Erfindung ist nicht auf die dargestellte Ausführungsform der Anordnung 10 beschränkt. So ist es ohne weiteres möglich, die Grundfläche 62 der Anordnung 10 abweichend von der vorstehend beschriebenen Ausführungsform quadratisch, kreisförmig oder ellipsenförmig auszugestalten. Demnach sind das wareneingangsseitige Ende 14 und das warenausgangsseitige Ende 18 in einem randseitigen Bereich 60 oder am Rand einer quadratisch, kreisförmig oder ellipsenförmig ausgebildeten Grundfläche 62 angeordnet. Gleichzeitig sind die Waren 12, 12' in einem Warenfluss von nahezu geschlossener Form bewegbar, die insbesondere an eine quadratisch, kreisförmig oder ellipsenförmig ausgebildete Grundfläche der Anordnung angepasst ist.

## Patentansprüche

1. Anordnung zur reihenfolgerichtigen Kommissionierung und Bereitstellung von Waren (12, 12'), insbesondere von quaderförmigen Stückgütern, wie Behältern, Kartons oder (Getränke-)Kisten, umfassend
ein wareneingangsseitiges Ende (14) zum Aufnehmen von mit jeweils gleichartigen Waren (12) bestückten Sammelladungsträgern (16),
mindestens eine dem wareneingangsseitigen Ende (14) nachgeordnete, vertikal oder im Wesentlichen vertikal verlaufende Transportbahn (28), über welche die mit den jeweils gleichartigen Waren (12) bestückten Sammelladungsträger (16) vertikal nach oben bewegbar sind,
wenigstens einen der vertikal oder im Wesentlichen vertikal verlaufenden Transportbahn (28) nachgeordneten Entstapelplatz (30, 32) zum Vereinzeln der jeweils gleichartigen Waren (12) von den Sammelladungsträgern (16),
eine Vielzahl von über- und/oder nebeneinander angeordneten Transportbahnen (38), von welchen die vereinzelten Waren (12) aufnehmbar und zu einem Ende der Transportbahnen (38) bewegbar sind, wobei jede der Transportbahnen (38) nur jeweils gleichartige Waren (12) aufnimmt und wobei die über- und/oder nebeneinander angeordneten Transportbahnen (38) von der wenigstens einen oberen Ebene (58) des wenigstens einen Entstapelplatzes (30, 32) und/oder Stapelplatzes (50, 52) zu der Ebene (56) von wareneingangsseitigem und warenausgangsseitigem Ende (14, 18) geneigt angeordnet sind,
eine Vielzahl von Entnahmeeinrichtungen (44) am Ende jeder der Transportbahnen (38), durch welche zu kommissionierende, zum Versand bereitzustellende Waren (12) aus den Transportbahnen (38) rechnergesteuert freigebbar sind, wenigstens zwei den Entnahmeeinrichtungen (44) nachgeordnete, wenigstens teilweise vertikal verlaufende Förderbahnen (46), an/über welche die kommissionierten, zum Versand bereitgestellten Waren (12') rechnergesteuert übergebbar und nach oben bewegbar sind, wobei die wenigstens zwei vertikal verlaufenden Förderbahnen (46) einen Matrixsorter bilden und eine reihenfolgerichtige Kommissionierung und Bereitstellung von Waren (12') zusammen mit den Entnahmeeinrichtungen (44) und einer Steuereinrichtung in einer Kontroll- und Kommandostation ermöglichen,
wenigstens einen der wenigstens einen teilweise vertikal verlaufenden Förderbahn (46) nachgeordneten Stapelplatz (50, 52) zum Bestücken der Sammelladungsträger (16') mit den kommissionierten, zum Versand bereitgestellten Waren (12'),
mindestens eine dem Stapelplatz (50, 52) nachgeordnete, vertikal oder im Wesentlichen vertikal verlaufende Transportbahn (54), über welche die mit den kommissionierten, zum Versand bereitgestellten Waren (12') bestückten Sammelladungsträger (16') vertikal nach unten bewegbar sind, und ein der vertikal verlaufenden Transportbahn (54) nachgeordnetes, warenausgangsseitiges Ende (18) zum Abgeben der mit kommissionierten, zum Versand bereitgestellten Waren (12, 12') bestückten Sammelladungsträger (16, 16'),
wobei das wareneingangsseitige Ende (14) zum Aufnehmen von den mit jeweils gleichartigen Waren (12) bestückten Sammelladungsträgern (16) in einer horizontalen Ebene (56) unterhalb einer horizontalen Ebene (58) des wenigstens einen Entstapelplatzes (30, 32) zum Vereinzeln der jeweils gleichartigen Waren (12) von den Sammelladungsträgern (16) und das warenausgangsseitige Ende (18) zum Abgeben der von mit kommissionierten, zum Versand bereitgestellten Waren (12') bestückten Sammelladungsträger (16') in einer horizontalen Ebene (56) unterhalb einer horizontalen Ebene (58) des wenigstens einen Stapelplatzes (50, 52) angeordnet sind.

2. Anordnung nach Anspruch 1, **dadurch gekennzeichnet, dass** das wareneingangsseitige Ende (14) und das warenausgangsseitige Ende (18) auf einer gemeinsamen, insbesondere ebenerdigen, Ebene (56) angeordnet sind.

3. Anordnung nach Anspruch 1 oder 2, **dadurch gekennzeichnet, dass** der wenigstens eine Entstapelplatz (30, 32) und der wenigstens eine Stapelplatz (50, 52) auf einer gemeinsamen Ebene (58), insbesondere oberhalb der ebenerdigen Ebene (56) des wareneingangsseitigen Endes (14) und des warenausgangsseitigen Endes (18), und/oder auf zueinander unterschiedlichen Ebenen angeordnet sind.

4. Anordnung nach einem der Ansprüche 1 bis 3, **dadurch gekennzeichnet, dass** das wareneingangsseitige Ende (14) und das warenausgangsseitige Ende (18) zueinander benachbart angeordnet sind.

5. Anordnung nach einem der Ansprüche 1 bis 4, **dadurch gekennzeichnet, dass** das wareneingangsseitige Ende (14) und das warenausgangsseitige Ende (18) in einem randseitigen Bereich (60) oder am Rand einer rechteckförmig, quadratisch, kreisförmig oder ellipsenförmig ausgebildeten Grundfläche (62) der Anordnung (10) angeordnet sind.

6. Anordnung nach einem der Ansprüche 1 bis 5, **dadurch gekennzeichnet, dass** die Waren (12, 12') vom wareneingangsseitigen Ende (14) bis zum warenausgangsseitigen Ende (18) in einem Warenfluss von nahezu geschlossener, insbesondere an eine rechteckförmig, quadratisch, kreisförmig oder ellipsenförmig ausgebildete Grundfläche (62) der Anordnung (10) angepasster, Form bewegbar sind.

7. Anordnung nach einem der Ansprüche 1 bis 6, **dadurch gekennzeichnet, dass** die Waren (12, 12') vom wareneingangsseitigen Ende (14) bis zum warenausgangsseitigen Ende (18) in einem Warenfluss über wenigstens zwei Ebenen (56, 58) zwischen dem wareneingangsseitigen Ende (14) und dem warenausgangsseitigen Ende (18) bewegbar sind.

8. Anordnung nach einem der Ansprüche 1 bis 7, **dadurch gekennzeichnet, dass** dem wareneingangsseitigen Ende (14) und/oder dem warenausgangsseitigen Ende (18) ein Sammelladungsträgerzwischenlager (20) zur Aufnahme der mit jeweils gleichartigen Waren (12) bestückten Sammelladungsträger (16) und/oder der mit kommissionierten, zum Versand bereitgestellten Waren (12') bestückten Sammelladungsträger (16') zugeordnet ist/sind.

9. Anordnung nach Anspruch 8, **dadurch gekennzeichnet, dass** das Sammelladungsträgerzwischenlager (20) in einem Bereich im Wesentlichen unterhalb des wenigstens einen Entstapelplatzes (30, 32) und/oder des wenigstens einen Stapelplatzes (50, 52) angeordnet ist.

10. Anordnung nach einem der Ansprüche 1 bis 9, **dadurch gekennzeichnet, dass** der wenigstens eine Entstapelplatz (30, 32) und/oder der wenigstens eine Stapelplatz (50, 52) auf einer Bühne, einem Gerüst oder dergleichen Tragkonstruktion, insbesondere aus Stahl, angeordnet ist/sind.

11. Anordnung nach einem der Ansprüche 1 bis 10, **dadurch gekennzeichnet, dass** der wenigstens eine Entstapelplatz (30, 32) und/oder der wenigstens eine Stapelplatz (50, 52) automatisch oder manuell betreibbar ausgebildet ist/sind.

12. Anordnung nach einem der Ansprüche 1 bis 11, **dadurch gekennzeichnet, dass** der wenigstens eine Entstapelplatz (30, 32) manuell betreibbar ausgebildet und zwischen zwei vertikal oder im Wesentlichen vertikal verlaufenden Transportbahnen (28), über welche die mit den jeweils gleichartigen Waren (12) bestückten Sammelladungsträger (16) vertikal nach oben bewegbar sind, und/oder dass der wenigstens eine Stapelplatz (50, 52) manuell betreibbar ausgebildet und zwischen zwei vertikal oder im Wesentlichen vertikal verlaufenden Transportbahnen (54), über welche die mit den kommissionierten, zum Versand bereitgestellten Waren (12') bestückten Sammelladungsträger (16') vertikal nach unten bewegbar sind, angeordnet ist/sind.

13. Anordnung nach einem der Ansprüche 1 bis 12, **dadurch gekennzeichnet, dass** die über- und/oder nebeneinander angeordneten Transportbahnen (38) von der wenigstens einen oberen Ebene (58) des wenigstens einen Entstapelplatzes (30, 32) und/oder Stapelplatzes (50, 52) zu der Ebene (56) von wareneingangsseitigem und warenausgangsseitigem Ende (14, 18) in einer Neigung mit einem Winkel von bis zu etwa 15°, insbesondere zwischen etwa 2° und 10° und vorzugsweise zwischen etwa 3° und 7° angeordnet sind.

14. Anordnung nach einem der Ansprüche 1 bis 13, **dadurch gekennzeichnet, dass** den über- und/oder nebeneinander angeordneten Transportbahnen (38) eine oder mehrere Fördereinrichtung/en (40) am Anfang der Transportbahnen (38), durch welche die vereinzelten Waren (12) in die Transportbahnen (38) hineinförderbar sind, zugeordnet sind.

15. Anordnung nach einem der Ansprüche 1 bis 14, **dadurch gekennzeichnet, dass** die wenigstens eine den Entnahmeeinrichtungen (40) nachgeordnete, wenigstens teilweise vertikal verlaufende Förderbahn (46) als lineare Hubfördereinrichtung und/oder Spiral- oder Schraubenfördereinrichtung ausgebildet ist.

## Claims

1. Arrangement for picking and provision of goods (12, 12') in the correct sequence, in particular of cubic piece goods, such as containers, cartons or (beverage) crates, comprising
an inbound-goods end (14) for receiving collective load carriers (16) equipped with goods (12) of the same kind each,
at least one vertically or essentially vertically running transport lane (28) downstream of the inbound-goods end (14) via which the collective load carriers (16) equipped with the goods (12) of the same kind each vertical can be moved upwards,
at least one unstacking station (30, 32) downstream of the vertically or essentially vertically running transport lane (28) to separate the respective goods (12) of the same kind from the collective load carriers (16),
a plurality of transport lanes (38) arranged on top of and/or next to each other, from which the separated goods (12) can be taken up and moved to an end of the transport lanes (38), wherein each of the transport lanes (38) will only take up respectively goods (12) of the same kind and wherein the transport lanes (38) arranged on top of and/or next to each other are arranged inclined from the at least one upper level (58) of the at least one unstacking station (30, 32) and/or stacking station (50, 52) to the level (56) of the inbound-goods and outbound-goods ends (14, 18),
a plurality of removal devices (44) at the end of each of the transport lanes (38), via which goods (12) to be picked and provisioned for shipping can be released from the transport lanes (38) controlled by a computer,
at least two at least partially vertically running conveyor lanes (46) downstream of the removal devices (44) on/via which the picked goods (12') provisioned for shipment can be handed over controlled by a computer and moved upwards, wherein the at least two vertically running conveyor lanes (46) form a matrix sorter and permit picking and provision of goods (12') in the correct sequence together with the removal devices (44) and a control device in a control and command station,
at least one stacking station (50, 52) downstream of the at least one partially vertically running conveyor lane (46) for equipping the collective load carriers (16') equipped with the picked goods (12') provisioned for shipping,
at least one vertically or essentially vertically running transport lane (54) downstream of the stacking station (50, 52) via which the collective load carriers (16') equipped with the picked goods (12') provisioned for shipping can be moved vertically downwards, and
an outbound-goods end (18) downstream of the vertically running transport lane (54) to hand over the collective load carriers (16, 16') equipped with picked goods (12, 12') provisioned for shipping,
wherein the outbound-goods end (14) for receiving the collective load carriers (16) equipped with goods (12) of the same kind each is arranged at a horizontal level (56) below a horizontal level (58) of the at least one unstacking station (30, 32) to separate the respective goods (12) of the same kind from the collective load carriers (16) and the outbound-goods end (18) to hand over the collective load carriers (16') equipped with picked goods (12') provisioned for shipping is arranged at a horizontal level (56) below a horizontal level (58) of the at least one stacking station (50, 52).

2. Arrangement according to claim 1, **characterized in that** the inbound-goods end (14) and the outbound-goods end (18) are arranged on a shared level (56), in particular at ground level.

3. Arrangement according to claim 1 or 2, **characterized in that** the at least one unstacking station (30, 32) and the at least one stacking station (50, 52) are arranged on a shared level (58), in particular above the level (56) at ground level of the inbound-goods end (14) and of the outbound-goods end (18), and/or on levels that differ from each other.

4. Arrangement according to one of the claims 1 to 3, **characterized in that** the inbound-goods end (14) and the outbound-goods end (18) are arranged adjacent to each other.

5. Arrangement according to one of the claims 1 to 4, **characterized in that** the inbound-goods end (14) and the outbound-goods end (18) are arranged in an edge-side area (60) or at the edge of a rectangular, square, circular or ellipsoidal footprint (62) of the arrangement (10).

6. Arrangement according to one of the claims 1 to 5, **characterized in that** the goods (12, 12') can be moved from the inbound-goods end (14) to the outbound-goods end (18) in a goods flow with a nearly closed shape, in particular adjusted to a rectangular, square, circular or ellipsoidal footprint (62) of the arrangement (10.

7. Arrangement according to one of the claims 1 to 6, **characterized in that** the goods (12, 12') can be moved from the inbound-goods end (14) to the outbound-goods end (18) in a goods flow across at least two levels (56, 58) between the inbound-goods end (14) and the outbound-goods end (18).

8. Arrangement according to one of the claims 1 to 7, **characterized in that** a collective load carrier interim storage (20) for receiving the collective load carriers (16) equipped with goods (12) of the same kind each and/or the collective load carriers (16') equipped with picked goods (12') provisioned for shipping is/are assigned to the inbound-goods end (14) and/or the outbound-goods end (18).

9. Arrangement according to claim 8, **characterized in that** the collective load carrier interim storage (20) is arranged in an area essentially below the at least one unstacking station (30, 32) and/or the at least one stacking station (50, 52) .

10. Arrangement according to one of the claims 1 to 9, **characterized in that** the at least one unstacking station (30, 32) and/or the at least one stacking station (50, 52) is/are arranged on a stage, a scaffolding or a similar carrying structure, in particular of steel.

11. Arrangement according to one of the claims 1 to 10, **characterized in that** the at least one unstacking station (30, 32) and/or the at least one stacking station (50, 52) is/are formed automatically or manually operable.

12. Arrangement according to one of the claims 1 to 11, **characterized in that** the at least one unstacking station (30, 32) is/are formed manually operable and arranged between two vertically or essentially vertically running transport lanes (28), via which the collective load carriers (16) equipped with the goods (12) of the same kind each can be moved vertically up and/or that the at least one stacking station (50, 52) is/are formed manually operable and between two vertically or essentially vertically running transport lanes (54) via which the collective load carriers (16') equipped with the picked goods (12') provisioned for shipping can be moved vertically down.

13. Arrangement according to one of the claims 1 to 12, **characterized in that** the transport lanes (38) arranged on top of and/or next to each other are arranged with an inclination from the at least one upper level (58) of the at least one unstacking station (30, 32) and/or stacking station (50, 52) to the level (56) of inbound-goods and outbound-goods end (14, 18) with an angle of up to about 15°, in particular between about 2° and 10° and preferably between about 3° and 7°.

14. Arrangement according to one of the claims 1 to 13, **characterized in that** one or several conveyor facility/facilities (40) at the beginning of the transport lanes (38), via which the separated goods (12) can be transported into the transport lanes (38), are assigned to the transport lanes (38) arranged on top of and/or next to each other.

15. Arrangement according to one of the claims 1 to 14, **characterized in that** the at least one at least partially vertically running conveyor lane (46) downstream of the removal devices (40) is formed as a linear lift transport device and/or spiral or screw conveyor device.

## Revendications

1. Système de commissionnement et de préparation de marchandises (12, 12') dans le bon ordre, en particulier de marchandises de détail de forme parallélépipédique, telles que des récipients, des cartons ou des caisses (de boisson), comportant
une extrémité (14) côté entrée de marchandises pour recevoir des supports de groupage (16) équipés de marchandises respectives de même type (12),
au moins une bande transporteuse (28) agencée en aval de l'extrémité (14) côté entrée de marchandises et s'étendant verticalement ou sensiblement verticalement, par laquelle les supports de groupage (16) équipés de marchandises respectives de même type (12) peuvent être déplacés verticalement vers le haut,
au moins un poste de dépilage (30, 32) qui est agencé en aval de la bande transporteuse (28) s'étendant verticalement ou sensiblement verticalement et qui est destiné à individualiser les marchandises respectives de même type (12) depuis les supports de groupage (16),
une multitude de bandes transporteuses (38) agencées les unes au-dessus ou et/ou à côté des autres, depuis lesquelles les marchandises individualisées (12) peuvent être reprises et déplacées jusqu'à une extrémité des bandes transporteuses (38), chacune des bandes transporteuses (38) reprenant chacune seulement des marchandises de même type (12), et les bandes transporteuses (38) agencées les unes au-dessus et/ou à côté des autres étant agencées en étant inclinées depuis ledit au moins un plan supérieur (58) dudit au moins un poste de dépilage (30, 32) et/ou poste d'empilage (50, 52) jusqu'au plan (56) de l'extrémité (14, 18) côté entrée de marchandises et côté sortie de marchandises,
une multitude de moyens de prélèvement (44) à l'extrémité de chacune des bandes transporteuses (38), par lesquels des marchandises (12) à commissionner et à préparer pour l'expédition peuvent être libérées depuis les bandes transporteuses (38) en étant commandées par ordinateur,
au moins deux bandes de convoyage (46) agencées en aval des moyens de prélèvement (44) et s'étendant au moins partiellement verticalement, auxquelles/par lesquelles les marchandises (12') commissionnées préparées pour l'expédition peuvent être remises et déplacées vers le haut en étant commandées par ordinateur, lesdites au moins deux bandes de convoyage (46) s'étendant verticalement formant une trieuse matricielle et permettant un commissionnement et une préparation de marchandises (12') dans le bon ordre, conjointement avec les moyens de prélèvement (44) et avec un moyen de commande dans une station de contrôle et de commande,
au moins un poste d'empilage (50, 52) agencé en aval de ladite au moins une bande de convoyage (46) s'étendant au moins partiellement verticalement, pour équiper les supports de groupe (16') avec les marchandises (12') commissionnées préparées pour l'expédition,
au moins une bande transporteuse (54) agencée en aval du poste d'empilage (50, 52) et s'étendant verticalement ou sensiblement verticalement, par laquelle les supports de groupage (16') équipés des marchandises (12') commissionnées préparées pour l'expédition peuvent être déplacés verticalement vers le bas, et
une extrémité (18) côté sortie de marchandises agencée en aval de la bande transporteuse verticale (54) et destinée à remettre les supports de groupage (16, 16') équipés des marchandises (12, 12') commissionnées préparées pour l'expédition,
dans lequel
l'extrémité (14) côté entrée de marchandises destinée à reprendre les supports de groupage (16) équipés des marchandises respectives de même type (12) est agencée dans un plan horizontal (56) au-dessous d'un plan horizontal (58) dudit au moins un poste de dépilage (30, 32) destiné à individualiser les marchandises respectives de même type (12) depuis les supports de groupage (16,) et l'extrémité (18) côté sortie de marchandises destinée à remettre les supports de groupage (16') équipés des marchandises (12') commissionnées préparées pour l'expédition est agencée dans un plan horizontal (56) au-dessous d'un plan horizontal (58) dudit au moins un poste d'empilage (50, 52).

2. Système selon la revendication 1, **caractérisé en ce que** l'extrémité (14) côté entrée de marchandises et l'extrémité (18) côté sortie de marchandises sont agencées sur un plan commun (56), en particulier situé au niveau du sol.

3. Système selon la revendication 1 ou 2, **caractérisé en ce que** ledit au moins un poste de dépilage (30, 32) et ledit au moins un poste d'empilage (50, 52) sont agencés sur un plan commun (58), en particulier au-dessus du plan (56) situé au niveau du sol de l'extrémité (14) côté entrée de marchandises et de l'extrémité (18) côté sortie de marchandises, et/ou sur des plans différents l'un de l'autre.

4. Système selon l'une des revendications 1 à 3, **caractérisé en ce que** l'extrémité (14) côté entrée de marchandises et l'extrémité (18) côté sortie de marchandises sont agencées au voisinage l'une de l'autre.

5. Système selon l'une des revendications 1 à 4, **caractérisé en ce que** l'extrémité (14) côté entrée de marchandises et l'extrémité (18) côté sortie de marchandises sont agencées dans une zone de bord (60) ou au bord d'une surface de base (62) du système (10) réalisée en forme rectangulaire, carrée, circulaire ou elliptique.

6. Système selon l'une des revendications 1 à 5, **caractérisé en ce que** les marchandises (12, 12') peut être déplacées depuis l'extrémité (14) côté entrée de marchandises jusqu'à l'extrémité (18) côté sortie de marchandises en un flux de marchandises de forme pratiquement fermée, en particulier adaptée à une surface de base (62) du système (10) réalisée en forme rectangulaire, carrée, circulaire ou elliptique.

7. Système selon l'une des revendications 1 à 6, **caractérisé en ce que** les marchandises (12, 12') peut être déplacées depuis l'extrémité (14) côté entrée de marchandises jusqu'à l'extrémité (18) côté sortie de marchandises en un flux de marchandises sur au moins deux plans (56, 58) entre l'extrémité (14) côté entrée de marchandises et l'extrémité (18) côté sortie de marchandises.

8. Système selon l'une des revendications 1 à 7, **caractérisé en ce qu'**un entrepôt (20) de supports de groupage destiné à reprendre les supports de groupage (16) équipés des marchandises respectives de même type (12) et/ou les supports de groupage (16') équipés des marchandises (12') commissionnées préparées pour l'expédition est/sont associé(s) à l'extrémité (14) côté entrée de marchandises et/ou à l'extrémité (18) côté sortie de marchandises.

9. Système selon la revendication 8, **caractérisé en ce que** l'entrepôt (20) de supports de groupage est agencé dans une zone sensiblement au-dessous dudit au moins un poste de dépilage (30, 32) et/ou dudit au moins un poste d'empilage (50, 52).

10. Système selon l'une des revendications 1 à 9, **caractérisé en ce que** ledit au moins un poste de dépilage (30, 32) et/ou ledit au moins un poste d'empilage (50, 52) est/sont agencé(s) sur une plate-forme, un échafaudage ou une construction porteuse similaire, en particulier en acier.

11. Système selon l'une des revendications 1 à 10, **caractérisé en ce que** ledit au moins un poste de dépilage (30, 32) et/ou ledit au moins un poste d'empilage (50, 52) est/sont réalisé(s) avec fonctionnement automatique ou manuel.

12. Système selon l'une des revendications 1 à 11, **caractérisé en ce que** ledit au moins un poste de dépilage (30, 32) est réalisé avec fonctionnement manuel et est agencé entre deux bandes transporteuses (28) s'étendant verticalement ou sensiblement verticalement par lesquelles les supports de groupage (16) équipés des marchandises respectives de même type (12) peuvent être déplacés verticalement vers le haut, et/ou ledit au moins un poste d'empilage (50, 52) est réalisé avec fonctionnement manuel et est agencé entre deux bandes transporteuses (54) s'étendant verticalement ou sensiblement verticalement par lesquelles les supports de groupage (16') équipés des marchandises (12') commissionnées préparées pour l'expédition peuvent être déplacés verticalement vers le haut.

13. Système selon l'une des revendications 1 à 12, **caractérisé en ce que** les bandes transporteuses (38) agencées les unes au-dessus et/ou à côté des autres sont agencées avec une inclinaison depuis ledit au moins un plan supérieur (58) dudit au moins un poste de dépilage (30, 32) et/ou dudit au moins un poste d'empilage (50, 52) vers le plan (56) de l'extrémité (14, 18) côté entrée de marchandises et côté sortie de marchandises, sous un angle allant jusqu'à environ 15°, en particulier entre environ 2° et 10° et de préférence entre environ 3° et 7°.

14. Système selon l'une des revendications 1 à 13, **caractérisé en ce qu'**un ou plusieurs moyens de convoyage (40) sont associés aux bandes transporteuses (38) agencées unes au-dessus et/ou à côté des autres, au début des bandes transporteuses (38), moyens par lesquels les marchandises (12) individualisées peuvent être convoyées jusque dans les bandes transporteuses (38).

15. Système selon l'une des revendications 1 à 14, **caractérisé en ce que** ladite au moins une bande de convoyage (46) agencée en aval des moyens de prélèvement (40) et s'étendant au moins partiellement verticalement est réalisée sous forme de moyen convoyeur de soulèvement linéaire et/ou de moyen convoyeur spiralé ou hélicoïdal.
